(19) Europäisches Patentamt
European Patent Office
Office européen des brevets

(11) **EP 3 467 691 B1**

(12) **EUROPEAN PATENT SPECIFICATION**

(45) Date of publication and mention
of the grant of the patent:
**26.08.2020 Bulletin 2020/35**

(51) Int Cl.:
**_G06F 21/14_** _(2013.01)_

(21) Application number: **17194988.6**

(22) Date of filing: **05.10.2017**

(54) **METHOD OF SELECTING SOFTWARE FILES**

VERFAHREN ZUR AUSWAHL VON SOFTWAREDATEIEN

PROCÉDÉ DE SÉLECTION DE FICHIERS DE LOGICIELS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.04.2019 Bulletin 2019/15**

(73) Proprietor: **ESHARD
33650 Martillac (FR)**

(72) Inventors:
• **GAGNEROT, Georges
13011 Marseille (FR)**

• **RAZAFINDRALAMBO, Tiana
33600 Pessac (FR)**

(74) Representative: **de Roquemaurel, Bruno et al
Omnipat
24 place des Martyrs de la Résistance
13100 Aix en Provence (FR)**

(56) References cited:
**WO-A1-2008/088073      US-A1- 2017 099 307
US-B1- 9 135 442**

EP 3 467 691 B1

**Description**

TECHNICAL FIELD

The present invention relates to software programs and/or applications and to protection of such applications against reverse engineering and protection of data manipulated or included in such applications.

BACKGROUND

Reverse engineering of an application consists of an analysis of the application in order to gather information about its operation and data it manipulates. The aim of reverse engineering is to summarize, to reconstruct the original source code of the application from its distributed binary form.

In parallel, in recent years, the number of software applications that can be downloaded to mobile devices from public "application stores" or "markets" has exploded. Applications such as Android applications are distributed using a file called Android™ Package kit (APK) comprising code and data that the application needs to be installed in relation to an Android operating system and to properly operate.

To produce an APK file, a program designed for Android platform is first compiled, and then all of its parts are assembled into one package file APK including all program executable codes (such as .dex files), resource file, assets file, certificates file, and manifest file. An APK file is usually a ZIP formatted package file having the Java Archive (JAR) file format. An APK file is an archive that usually contains the following files and folders:

- META-INF folder containing:

    a manifest file,
    a certificate of the application,
    a list of resources and SHA-1 digest of the corresponding lines in the manifest file,

- a LIB folder containing the binary code dedicated to a processor architecture, the folder being split into folders within it, containing program files compiled for different processors,
- a folder containing resource files not compiled,
- a folder containing application assets,
- an additional Android manifest file including the name, version, access rights, and library files referenced for the application; this file is in Android binary XML that can be converted into human-readable plaintext XML with dedicated tools such as AXMLPrinter2, APKTOOL, or Androguard,
- one program file "classes.dex" or several program files "classesN.dex" (N numbering the program file) containing compiled bytecode of classes, in the dex file format understandable by the Dalvik virtual machine or Android Runtime environment, and
- a file containing precompiled resources, such as binary XML.

Each APK file has one or more program files "classes.dex", "classesN.dex", which contain the entire program Java code. For portability reasons, programs for Android devices are commonly written in Java and compiled to bytecode (which is contained in program .class files). The compiled bytecode is then converted from Java Virtual machine-compatible .class files to the Dalvik-compatible .dex (Dalvik Executable) file in order to enable installation on a computing device. The Java bytecode in the .class files has a binary format and represents the instructions that can be executed by a Dalvik virtual machine.

An APK file can be disassembled using a reverse engineering tool such as APKTOOL which produces bytecode program files called "classes" and data files arranged in directories and sub-directories called "packages". A class such as a Java class is an extensible program-code-template for creating objects. A class represents an object category and has members, methods and attributes that are common to a set of objects. The attributes of a class define properties of the objects belonging to the class. An object is an instance of a class. The methods of a class define behaviors or functions of the objects belonging to the class. A method is a set of program instructions manipulating the attributes of an object of the class.

A lot of information present in a Java source code file will frequently be contained in the corresponding bytecode file. This includes information about classes, methods, class attributes, and source code which can be present in a "LineNumberTable". This table links instructions to specific lines of the source code and another table called "Stack-MapTable" is used to verify variable types.

Reverse engineering tools such as decompilation tools exploit this additional embedded information to increase the output quality of the decompiled source code.

Some applications include, store or manipulate potentially sensitive or private information. This sensitive information can be retrieved by disassembling the application package file and by manually analyzing the files thus obtained, and/or by analyzing the executed code and/or the manipulated data at runtime. Techniques and tools such as obfuscation techniques have been developed to prevent such an analysis or make it more difficult and time consuming. Some tools transform code portions of the application that have to be hidden to make them complex and/or confusing. The purpose of obfuscation techniques is to make a code portion less transparent and less readable and to increase the complexity of the data and control flow of the code portion. Obfuscation can be applied to code, data, control flow, and layout. Obfuscation can also prevent decompilation.

However, when considering an application, it is difficult to evaluate or measure the tamper resistance of the application, or the quality of the obfuscation applied to it, in particular when the application after disassembling comprises hundreds or thousands of class files. The evaluation of the quality of obfuscation should require determining what code portions are obfuscated, how they are obfuscated, how resilient is the obfuscation and what the obfuscation contributes to hide from external world. Indeed, security-sensitive code portions of an application may need to be more obfuscated than non-sensitive code portions. In addition, obfuscation of a security-sensitive code portion may aim to hide security-sensitive information.

There already exists some software metrics used in software development, for measuring maintainability of software. Some of these metrics use characteristics such as transparency, readability, and data and control flow complexity of a code portion, to evaluate comprehension of the latter. Transparency reflects how straightforward algorithmic concepts can be extracted from a code portion. Readability reflects the contribution of the names of variables, functions and classes to the comprehension of the logic of the code portion. Control flow defines which conditions control the operations of the code portion, and in which sequence they are tested. Data flow defines the data inputs to the code portion, and how these inputs are transformed and output. Data and control flow complexity reflect interdependencies between parts of the code portion and how they communicate with each other at runtime.

Documents US 2017/099307 and US 9 135 442 disclose methods for detecting malwares by looking for obfuscated programs according to different criteria.

Consequently, there is a need to quantify obfuscation of program files. Obfuscation quantification may then be used to sort or select files that should be more obfuscated. There is also a need to select program files that are insufficiently obfuscated regarding current needs, and optionally to process the selected files to improve their protection using obfuscation.

## SUMMARY

A method is described for testing an executable software application. The method comprises: extracting, by a processor, program code files from the executable application file, converting, by the processor, the program code files into program text files, for each program text file of the software application, computing at least one metric of syntactical metrics or program complexity metrics, and computing, by the processor, a respective score for each program text file based on the computed metrics; generating and providing, by the processor, a list of program text files, each program text file in the list being associated with its computed score.

According to an embodiment, the method further comprises: comparing each computed score with a threshold value, and selecting program text files as a function of results of the comparisons.

According to an embodiment, the method further comprises displaying the computed scores, each score being displayed as a tile having a color depending on the score value and being associated with a name of a corresponding program text file.

According to an embodiment, the displayed tiles are arranged in rows and columns.

According to an embodiment, further comprising extracting data files from the executable application file results in a folder tree structure, the program code files and data files being distributed in folders of a folder tree structure, each folder corresponding to a package of the executable software application, and each program code file corresponding to a class in one of the packages.

According to an embodiment, the syntactical metrics are applied to character strings of the program text files and comprise at least one of: ratios of character string numbers by size of character string with respect to a total number of character strings, a distribution of these ratios, and an average size of character string, ratio of a number of character strings having at least one non-ASCII character, with respect to the total number of character strings, ratio of a number of character strings having at least one non-alphabetic character, with respect to the total number of character strings, ratio of a number of character strings having a first encoding and character strings having a second encoding, with respect to the total number of character strings, ratio of a number of character strings having at least one Unicode character, with respect to the total number of character strings, ratio of a number of character strings having at least one special character, with respect to the total number of character strings, ratio of a number of character strings having a non-printable character, with respect to the total number of character strings, and ratio of a number of character strings having an unknown encoding, with respect to the total number of character strings.

According to an embodiment, the program complexity metrics comprise at least one of: a total number of lines of code, numbers of packages, classes and functions or methods, numbers of instructions per function or method, a distribution of Application Programming Interface calls, distribution of classes, methods, class attributes, constants, Halstead's metrics, and McCabe cyclomatic complexity analysis.

According to an embodiment, the method further comprises: generating a control flow graph for each of the program text files, and/or generating a call graph including all the methods of functions of the application.

According to an embodiment, the method further comprises comparing each computed score with a respective threshold value, selecting the scores as a function of the comparison with their respective threshold value, and computing a global score for each program text file by adding coefficients defined respectively for each selected score as a function of the metrics corresponding to the selected score.

According to an embodiment, the method further comprises computing a global score for a file set of program text files by applying weighting coefficients to the global scores computed for the program text files of the file set, and/or computing a global score for the software application by applying weighting coefficients to the scores computed from each program text file of the software application.

According to an embodiment, the method further comprises: selecting an obfuscation processing, selecting at least one source code file as a function of the score computed from the corresponding program file, applying the selected obfuscation processing to a source code file corresponding to each selected program text file, to generate a modified source code file of the selected source code file, and compiling and assembling source code files of the software application including each modified source code file, to generate a new executable application file, the new executable software application being further tested to identify program text files that are insufficiently obfuscated.

According to an embodiment, the global scores computed for the program text files are based on one or more metrics selected by a user, and the obfuscation processing is selected as function of the selected metrics.

Embodiments may also relate to a computer system for selecting executable program files of an executable software application, the computer system being configured to implement the method as previously defined.

Embodiments may also relate to a computer program product loadable into a computer memory and comprising code portions which, when carried out by one or more computers, configure the one or more computers to carry out the method as previously defined.

## BRIEF DESCRIPTION OF THE DRAWINGS

The method and/or device may be better understood with reference to the following drawings and description. Non-limiting and non-exhaustive descriptions are described with the following drawings. In the figures, like referenced signs may refer to like parts throughout the different figures unless otherwise specified.

Figure 1 is a block diagram of a file selection system implementing a method of analyzing a software application, computing an obfuscation degree, and selecting program files according to the computed obfuscation degree, according to an embodiment;

Figure 2 is a block diagram of a preprocessing tool of the system of Figure 1, and a database produced by the preprocessing tool, according to an embodiment;

Figures 3A, 3B, 3C, 3D are histograms of metrics applied to files of a software application, according to an embodiment;

Figure 4 illustrates an exemplary image produced by the system of Figure 1, according to an embodiment;

Figure 5 is a block diagram of an example of obfuscation tool that can be used to process files selected by the file selection system of Figure 1;

Figure 6 is a block diagram of a network computing system in which the analyzing system can be implemented, according to an embodiment;

Figure 7 is a block diagram of a computer system that can implement the file selection system or a user terminal that can have access to the file selection system.

## DETAILED DESCRIPTION

As used hereinafter, the following terms have the following meanings, except when specifically indicated otherwise. The term "metrics" refers to values that express a degree to which the examined code satisfies some evaluation criterion.

The term "obfuscation" refers to a transformation of a program code in order to hide the original intent of the code by, for example, increasing complexity. Obfuscations may be measured by computing suitable metrics to the obfuscated code.

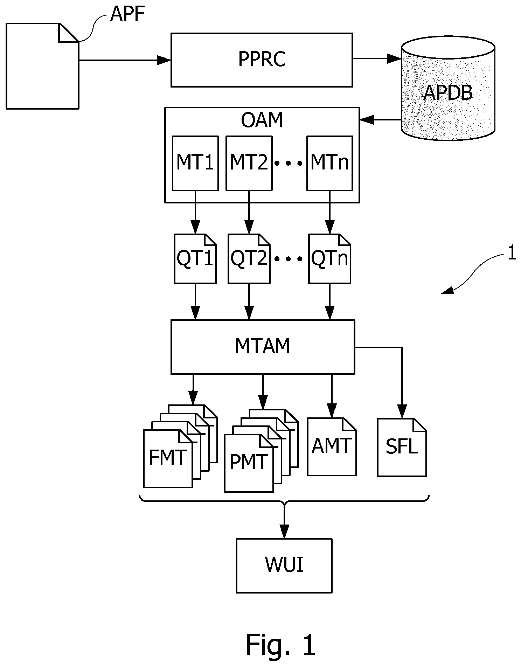

Figure 1 illustrates a computer system 1 designed to analyze a software application, according to an embodiment. The system 1 is configured to determine obfuscation degrees of software parts of the application, and thus to select and/or identify files having an insufficient obfuscation degree, with respect to a security sensitiveness of the operations they implement. The system 1 comprises a preprocessing module PPRC, an obfuscation analyzing module OAM, and a metrics analyzing module MTAM. The software application file APF can be an application software package, e.g. an Android application package, or an application file that can be installed in or executed by a target computing device.

The module PPRC disassembles the application file APF into package files or source files and/or separate files CF, DF which can be stored for example in a database APDB. The files in the database APDB comprise program code files CF and data files DF. The module PPRC can extract other information from the application packages or from the extracted files to facilitate obfuscation analysis of the application.

The module OAM comprises metrics modules MT1, MT2, ... MTn that have access to the stored information that can be in the database APBD. Each of the metrics modules MT1, MT2, ...MTn provides a respective metrics score QT1, QT2, ... QTn for each program code file CF of the application file APF in the database APDB.

The module MTAM is configured to compute a respective global obfuscation score FMT for each program code file CF extracted from the application file APF, on the basis of the metrics scores QT1-QTn computed for the file CF. The module MTAM is further configured to compute a respective global score PMT for each of packages extracted from the application file APF, on the basis of the global scores FMT computed for the program code files of the package. The module MTAM is further configured to compute a global score GMT for the application on the basis of the global scores PMT computed for the packages of the application.

The system 1 can further comprise a graphical user interface WUI enabling the user to input commands into the system 1 and to display obfuscation analyses results.

The user interface WUI can be configured to enable the user to define obfuscation threshold values to be applied to the global scores FMT, PMT and AMT. The definition of an obfuscation threshold value for the file scores FMT triggers the generation of a list of insufficiently obfuscated files SFL. The list SFL designates code files CF that could be advantageously submitted to an obfuscation process.

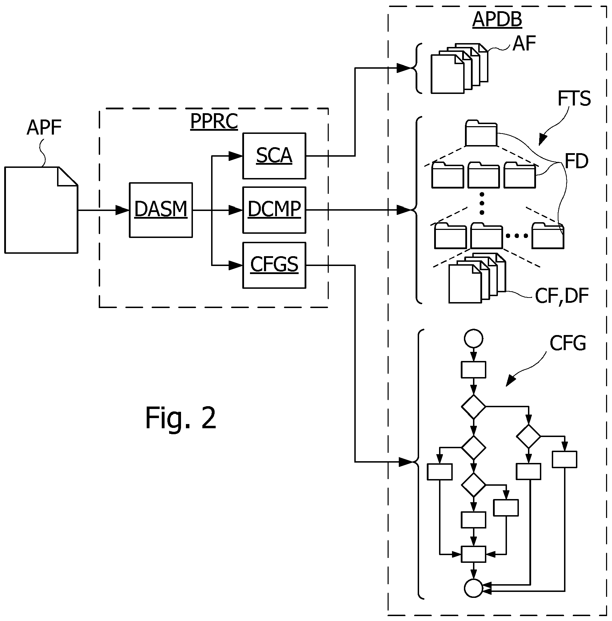

Figure 2 illustrates operations of the preprocessing module PPRC. The module PPRC can comprise a disassembling module DASM, a static code analyzing module SCA, a decompiling module DCMP, and a control flow graph module CFGS.

The disassembling module DASM disassembles the application file APF into different files enabling the application to be decompiled. In the case of an Android application package, the disassembling module may produce data files, resource files and a binary file containing the executable code. The binary file is further decompiled into a text file.

The analyzing module SCA performs parsing of the text file generated by the module DASM. The parsing operation extracts lists AF of classes and for each class:

class information,
class attributes,
class constants, and
class methods.

For each method, the module SCA provides a list of arguments and a call tree between methods of the same class or different classes.

The information extracted by the module SCA is stored into files AF in the database APDB. The module SCA can receive and process interactive commands from the user. These commands include search commands for searching for classes, properties, methods and method calls, using search filters. Search commands consist of a single query or multiple queries that may be combined in one. A query corresponds to a single piece of information that the user wants to fetch or know. Multiple queries can be combined in one in order to form cross-queries. This enables the user to better filter the result(s) he expects by combining multiple queries. The analyzing module SCA may also construct a call graph showing all method calls between the class methods of one file or one package or the whole application.

The decompilation module DCMP converts the text file containing the executable code into source files comprising class files CF dispatched into folders and subfolders FD arranged in a tree structure, each folder or subfolder FD corresponding to a package or sub-package. The folder tree structure with the files CF, DF in it is stored in the database APDB.

The control flow graph module CFGS is configured to analyze the text file containing the executable code produced by the disassembling module DASM, and to generate a control flow graph CFG for each method in each text code file CF. A code box in a control flow graph represents a sequential instruction code block, an arrow between two code blocks represents a program unconditional jump, and a test box (diamond box) with three arrows represents a conditional jump which links three code blocks. Each generated control flow graph CFG may be stored in the database APDB in association with the corresponding source code file CF. The control flow graph module CFGS may be further configured to analyze the generated control flow graphs to determine their respective complexity level.

In the case of an Android application package, the disassembling module DASM decompiles the binary file into a human-readable text file including instructions in an assembly language such as SMALI, or the like. The text file may be further disassembled into the Java programming language (which approximatively corresponds to the original source code syntax). The disassembling module DASM can be realized using a software tool such as APKTOOL. The analyzing module can be realized using a software tool such as SMALISCA. The decompilation module DCMP can be realized using a software tool such as DEX2JAR converting SMALI source code files into Java source code files. The control flow graph generation module CFGS can be realized using the software module CFGScanDroid.

Some of the metrics MT1-MTn modules of the module OAM can perform character string analysis, and/or program code analysis.

Classes, methods or functions, class attributes, variables and constants are usually identified in the files CF by a name formed of a character string composed of a certain number of characters. Also some constants can have a character string as a value.

In the case of Android, the assembly code generally uses SMALI syntax (as illustrated at https://www.quora.com/What-is-smali-inAndroid). SMALI syntax is very verbose, such that a lot of information is still present after decompilation, and may provide valuable information for the reverse engineering. Class, method or function, attribute, variable and constant names are examples of valuable information. Some obfuscation techniques consist of altering those names. In their non-obfuscated version, character strings are usually meaningful, understandable and/or intelligible. Character strings are easy to obfuscate and represent the simplest way to make harder the reverse engineering process as it removes a lot of meaningful information that can be used to understand the function of a program code portion, and how the latter operates. This is because character strings have a size, a character distribution, an encoding and sometimes uses a human language.

Generally, meaningful strings have 6 to 15 characters. One of the simplest obfuscations used by the most used obfuscator (ProGuard https://www.guardsquare.com/en/proguard) modifies all those names so they finally only comprise one character in their names. This is the simplest form of string obfuscation. Obfuscated character strings can also have a lot of characters, and consequently, long character strings, character strings with a distinguishable character distribution, and/or several character encodings.

The metrics resulting from character string analysis can also compute in each of the text code files CF:

- ratios of character string numbers by size of character string, with respect to a total number of character strings, a distribution of these ratios, and an average size of character string,
- ratio of a number of character strings having at least one non-ASCII character, with respect to the total number of character strings,
- ratio of a number of character strings having at least one non-alphabetic character, with respect to the total number of character strings,
- ratio of a number of character strings having a first encoding such as utf8-encoded and character strings having a second encoding, with respect to the total number of character strings,
- ratio of a number of character strings having at least one Unicode character (in escape mode or not), with respect to the total number of character strings,
- ratio of a number of character strings having at least one special character (such as carriage return, math symbol, space), with respect to the total number of character strings,
- ratio of a number of character strings having a non-printable character, with respect to the total number of character strings,
- ratio of a number of character strings having an unknown encoding, with respect to the total number of character strings,

To determine whether a character string is obfuscated or not, it may be considered which human language is used for programming. In the case of the English language, the average word length is 5 characters. In addition, the programmers often use names merging at most 3 or 4 words. Therefore a threshold value to decide whether a character string is obfuscated or not can be set to 2 x 5 when the English language is used. Below this threshold value, it can be considered that the character string may be obfuscated, which requires a further analysis to determine if it is really obfuscated.

The metrics in the form of a number can be used by comparing the metrics number with a threshold value, a score of the metric being 0 or 1 depending whether the metrics number is lower or greater than the threshold value.

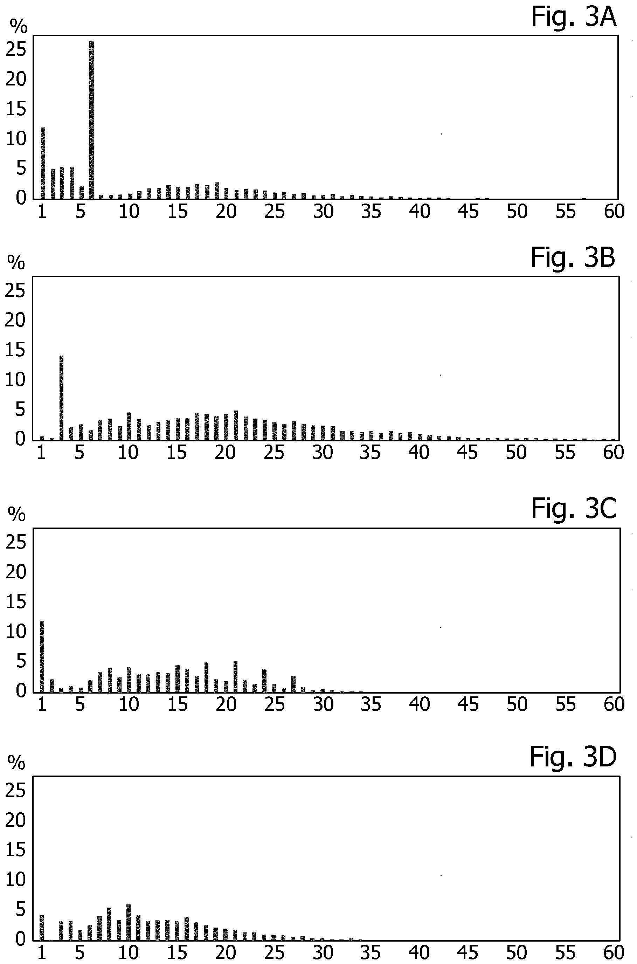

The metrics in the form of a distribution can be used by comparing the obtained distribution with a reference distribution or using criteria, the score of the metrics being 0 or 1 depending on the result of the comparison or the application of a criterion. Figures 3A, 3B, 3C, 3D show examples of histograms of sizes distribution of entity names in two software applications. The histograms of Figures 3A and 3B are related to class names. The histograms of Figures 3C and 3D are related to method names. The histogram of Figure 3A shows that 12% of the class names have only one character, which is very short for a class name and which can reveal obfuscation since one character is not sufficient to reveal the role played by a class in the application. Figure 3A further shows that about 26% of the class names have six characters, and about 30% have less than five characters, which is short for a class name. Above six characters, the numbers of the class names are shorter than 3% and the histogram has substantially a Gaussian shape.

The histogram of Figure 3B shows that about 14% of the class names have three characters and about 15% of the class names have less than four characters, which is also short for a class name and may reveal obfuscation. Above 12 characters, this histogram also has substantially a Gaussian shape.

The histogram of Figure 3C shows that about 12% of the method names have only one character, which is very short for a method name and which may reveal obfuscation. The histogram of Figure 3C further shows that about 2% of the method names have two characters. The histogram of Figure 3C further shows relative peaks at 18, 21, 24 and 27 characters which can reveal obfuscation. Above five characters, the other lengths of the method names substantially follow a Gaussian shape.

The histogram of Figure 3D shows that about 4% of the method names have one character and about 12% of the method names have less than five characters which is also short for a method name and may reveal obfuscation. Above five characters the histogram has substantially a Gaussian shape. Since the histogram of Figure 3C is more irregular than the histogram of Figure 3D and due to the presence of a peak at one character in Figure 3C, It can be said that the method names of the application of Figure 3D are less obfuscated than the ones of Figure 3C.

It can be deduced that a histogram with high peaks can be an indication of obfuscated software entity names. When such high peaks are observed for names of one or two characters or 2 x M characters, M being the average word length in the used language, it can be said that software entity names are obfuscated. In contrast, a histogram having a Gaussian shape cannot be exploited to determine if the software entity names are or are not obfuscated, thus requiring further investigation. Additional investigations may also be carried out in the previous cases to confirm first analysis results.

The computation of two standard deviations respectively applied to the names having less than five characters and to the names having more than five characters may be used to reveal obfuscation. When the standard deviation is lower than an appropriate threshold value, no obfuscation can be supposed. Above this threshold value, the standard deviation can reveal obfuscation or the quality of obfuscation is better.

The metrics resulting from program code analysis can compute in each of the code files CF:

- a number of lines of code or code instructions,
- numbers of packages, classes and functions or methods,
- numbers of instructions per function or method,
- a distribution of API (Application Programming Interface) usage,
- distributions of classes, methods, class attributes, constants,
- Halstead's metrics,
- McCabe cyclomatic complexity analysis,
- ...

Each of these metrics has a value which may be compared with a threshold value (that may be defined by the user), the score of the metrics being 0 or 1 depending on the result of the comparison.

Halstead's metrics is computed using the number n1 of distinct operators, the number n2 of distinct operands n, the total number N1 of operators, and the total number N2 of operands. When applied to a method or function, these numbers are used to compute:

- a program length N = N1+N2,
- a program vocabulary n = n1+n2,
- a program volume V = N x LOG2(n),
- a difficulty D = (n1/2) x (N2/n2)
- a programming effort E = D x V

The programming effort can be considered as representative of a complexity of the program code, and compared with a threshold value, the score of the metrics being 0 or 1 depending on the result of the comparison.

McCabe cyclomatic complexity analysis determines complexity and density of a program code of a particular function by analyzing its control flow graph CFG. This analysis is based on the computation of a number of linearly independent paths LIPN in a control flow graph CFG. The number LIPN can be computed using the following equation:

$$LIPN = E - N + 2 \hspace{4cm} (1)$$

where E is the number of arrows and N is the number of nodes (i.e. program code blocks without jump) in the graph CFG. In the example of the graph CFG in Figure 2, E = 16, n = 13 and LIPN = 5. It is generally considered that when the number LIPN is lower than 10, the corresponding function has a low complexity. When this number is higher than 50, the corresponding function is considered as very complex. The metrics based on McCabe cyclomatic complexity analysis may apply a threshold value equal to 10.

Other metrics performing program code analysis can compute in each of the code files CF:

- decompilation errors numbers, for example using different decompilation tools,
- number of dead code instructions,
- complexity of data structures used (usage of multi-dimension tables),
- NPath complexity (number of different paths in a function or method),
- Knot count (number of intersections of control flow paths in a function or method),
- Pivovarsky metrics,
- Harrison and Magel metrics,
- data flow based metrics,
- ...

The module MTAM computes a global obfuscation score FMT for each of the program code files CF extracted from the application file APF. The character string analysis metrics may be applied to the whole file CF. The program code analysis metrics may be applied to each of the functions or methods in the file CF. Then, code analysis metrics scores can be computed for a file CF using the scores provided by the metrics applied to the methods or functions of the file CF. A global score FMT can be computed for each of the program code file CF extracted from the application file APF, from all metrics scores computed for the file CF. The global score FMT for a file CF can be computed by combining using a linear combination the metrics scores QT1-QTn computed for the file CF, DF, each metrics score QT1-QTn being weighted by a respective weighting coefficient. The weighting coefficients can be defined such that the computed global scores FMT have a value between 0 and 1. When the metrics scores are numbers equal to 0 or 1, the global score FMT for a file CF is the sum of the weighting coefficients associated to the metrics scores equal to 1.

According to an embodiment, the module MTAM also computes a global score PMT for each package (corresponding to a folder FD) by adding the global scores FMT of all the program files CF belonging to the package (i.e. located in the folder FD and subfolders of the package). The module MTAM can further compute a global score AMT for the application by adding the global scores PMT of all separate packages of the application or adding the global scores FMT computed for each of all the program files CF of the application. The global scores PMT and AMT can be also obtained by computing weighted averages using weighting coefficients from the global scores FMT and PMT, respectively. The weighting coefficients can be determined and adjusted using machine learning.

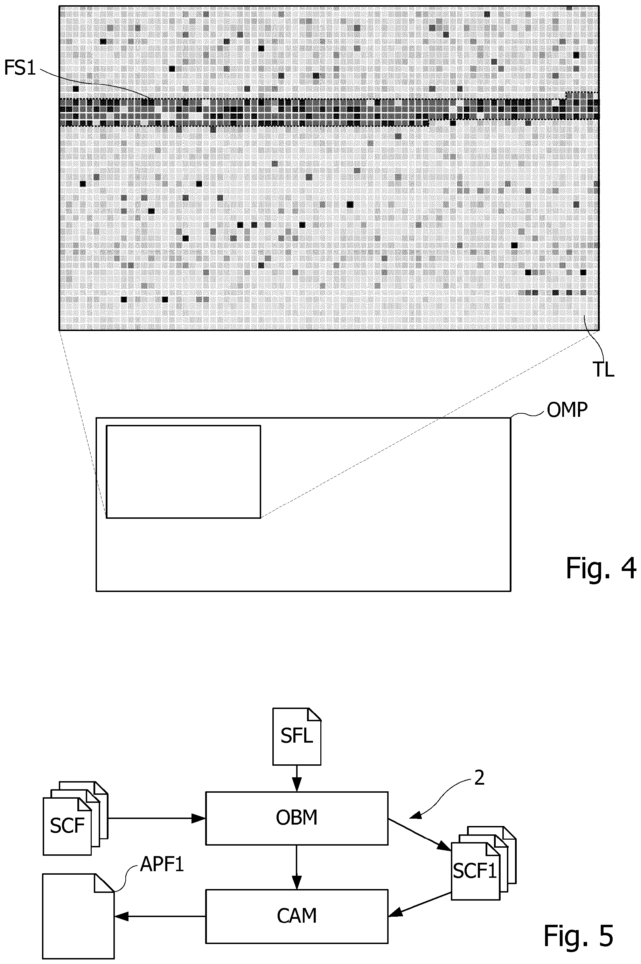

Figure 4 illustrates an example of image OMP that may be displayed by the module WUI. Figure 4 also shows a detailed view of the image OMP. The image OMP shows tiles TL arranged in rows and columns, each tile represents the global score FMT (i.e. the obfuscation degree) of a respective code file CF in the database APDB. Each tile TL may be displayed using a color code or a grey level code depending on the global score FMT of the corresponding code file CF. In the example of Figure 4, the tiles TL have a square or rectangular shape. However, the tiles may have any other shape. The tiles TL may be arranged in an order corresponding to a sequential reading of the folder tree structure FTS.

By positioning a pointer (e.g. a mouse pointer) on a tile TL, the name of the corresponding code file CF and the position thereof in the tree structure FTS may be displayed for example in a separate window, together with the computed obfuscation score FMT of the code file. The position of a code file CF is defined by the names of the (nested) packages to which the corresponding class belongs. The displayed window can also display APIs (Application Programming Interfaces) types (cryptography, database access, network access, ...) that are called in the file.

In the example of Figure 4, the image OMP shows a globally darker tile zone FS1 corresponding to generally less obfuscated code files, according to the grey level code used in Figure 4. The zone FS1 may show a less obfuscated package corresponding to a folder FD of the tree structure FTS.

The module WUI can further display a list of packages of the application, each package being displayed associated with the global obfuscation score PMT computed by the module MTAM. The module WUI can further display the global obfuscation score AMT computed for the application.

According to an embodiment, the module MTAM is configured to allow the user to set a score threshold value and to extract a list SFL of code files CF having an obfuscation score FMT lower than the score threshold value. The tiles TL of the image OMP can be also displayed with two different colors or grey level depending on whether the corresponding obfuscation score is greater or not than the threshold value.

According to an embodiment, the module MTAM is configured to allow the user to select a set of one or more metrics and to compute obfuscation scores for the program code files CF extracted from the application file APF, for the packages of the application and for the application itself, taking into account only the results provided by the selected metrics. When the user selects a set of at least one metrics, the image OMP can be constructed on the basis of the scores computed for the files CF by the module MTAM using the selected metrics. In this way, the user can focus on a particular metrics set, so that the list SFL designates code files CF having an insufficient score with respect to the selected metrics set.

The code files CF that are thus selected as being insufficiently obfuscated or the corresponding source code files can be modified to improve their obfuscation. For this purpose, there exist obfuscation tools corresponding to the obfuscation metrics MT1-MTn, that can process the corresponding source files to improve the metrics scores that can be computed from the resulting files CF.

Figure 5 illustrates an obfuscation tool 2 that can be used to process files that are selected in the list SFL provided by the system 1 as illustrated in Figure 1. The obfuscation tool 2 comprises an obfuscation module OBM and a compilation and assembling module CAM. The obfuscation module OBM implements one or more obfuscation techniques that can improve one or more of the metrics scores QT1-QTn computed for a code file CF by the module OAM.

One of the obfuscation techniques can rename some or all the names included in a code file CF, using arbitrary or random names. Other examples of known obfuscation techniques that can be implemented by the module OBM are disclosed in the following documents:

- Cloakware/Transcoder™: The core of Cloakware Code Protection™ (Cloakware product overview advertising material),
- U.S. Patent No. 6,594,761 (Chow et al.),
- U.S. Patent No. 6,668,325 (Collberg et al.),
- U.S. Patent No. 6,779,114 (Chow et al.),

The obfuscation module OBM receives the list SFL of files CF selected by the system 1 and the source code files SCF of the software application. The obfuscation module OBM can be configured to successively select a source code file SCF to process as a function of the files CF as set out in the list SFL. In the case of a software application written in an object-oriented programming language, each file in the list SFL corresponds to a class. The corresponding source code file SCF to process is the one defining this class. If the corresponding source code file SCF contains the definition of more than one class, the module OBM may process only the class corresponding to the selected file CF in the source code file SCF. The obfuscation parameters or techniques to apply to the selected source code file SCF can be selected by the user, or for example, as a function of a set of one or more metrics if the selection of the file by the system 1 is based on a particular set of metrics.

When all source code files SCF corresponding to a file in the list SFL are processed, the module CAM compiles the source code files SCF and assembles them to produce a modified application file APF1 that can be input to the system 1. The methods implemented by the system 1 and the obfuscation tool 2 can be performed several times on an application file APF and then on a resulting modified application file APF1, using different obfuscation parameter(s) or technique(s), until the global score AMT or identified package global scores PMT reach an expected value, or until the file list SFL is empty or only contains files that do not need to be obfuscated.

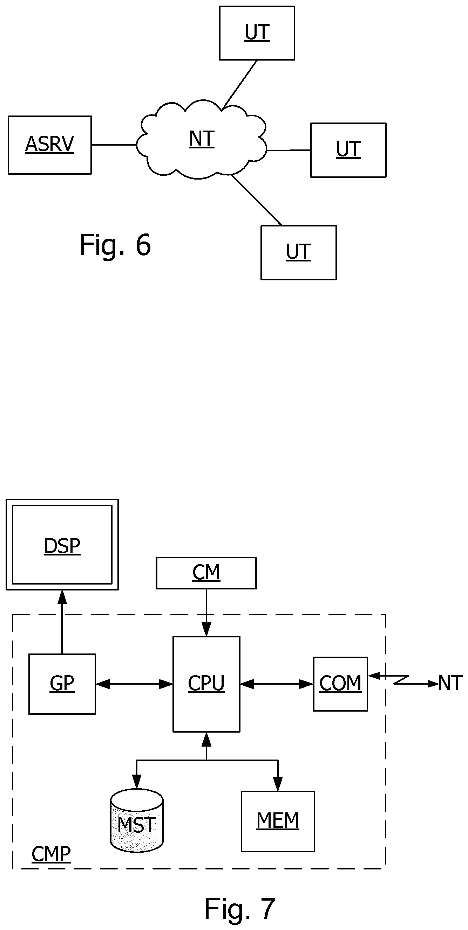

One or more of the above-described techniques can be implemented in or involve one or more computer systems. Figure 6 illustrates a generalized example of a computing environment. The computing environment is not intended to suggest any limitation as to scope of use or functionality of a described embodiment. With reference to Figure 6, the computing environment includes a processing server ASRV and user terminals UT that can access the server ASRV via a data transmission network such as Internet, or any telecommunication network or the like. The server ASRV is configured to implement the system 1 of Figure 1 to select files of an application received from a user terminal UT. The user interface WUI of the system 1 can be implemented in the user terminals UT.

Figure 7 illustrates a computing environment CMP that can implement the server ASRV and/or the user terminal UT. With reference to Figure 7, the computing environment CMP comprises at least one processing unit CPU and memory MEM. The processing unit CPU executes computer-executable instructions and may be a hardware-implemented processor or a virtual processor. The memory MEM may be volatile memory (e.g., registers, cache, RAM), non-volatile memory (e.g., ROM, EEPROM, flash memory, etc.), or some combination of the two. The memory MEM may store software instructions for implementing the described system 1 when executed by one or more processors.

The computing environment CMP can include additional features. For example, the computing environment CMP may include storage MST, one or more input devices CM, one or more output devices DSP, and/or one or more communication connections COM. An interconnection mechanism, such as a bus, controller, or network interconnects the components of the computing environment CMP. Typically, operating system software or firmware (not shown) provides an operating environment for any other software executed in the computing environment CMP, and coordinates activities of the components of the computing environment CMP.

The storage MST may be removable or non-removable, and may include magnetic and/or optic disks, or any other medium which can be used to store information and which can be accessed within the computing environment CMP. The storage MST may store instructions related to the software.

The input device(s) CM may be a touch input device such as a keyboard, mouse, pen, trackball, touch screen, or game controller, a voice input device, a scanning device, a digital camera, remote control, or another device that provides input to the computing environment CMP. The output device(s) DSP may be a display, television, monitor, printer, speaker, or another device that provides output from the computing environment CMP.

The communication connection(s) COM enable communication over a communication medium to another computing entity. The communication medium conveys information such as the application file APF, audio or video information, or other data.

Figure 7 illustrates computing environment, display device DSP, and input device CM as separate devices for ease of identification only. The computing environment CMP, display device DSP, and input device CM may be separate devices (e.g., a personal computer connected by wires to a monitor and mouse), may be integrated in a single device (e.g., a mobile device with a touch-display, such as a smartphone or a tablet), or any combination of devices (e.g., a computing device operatively coupled to a touch-screen display device, a plurality of computing devices attached to a single display device and input device, etc.). The computing environment CMP may be a mobile device, a personal computer, a set-top box, or one or more servers, for example a set of networked servers, a clustered server environment, or a cloud network of computing devices.

The methods and computer systems previously disclosed can process applications written in an object-oriented language as well as in other programming languages.

The described embodiment can be modified in arrangement and detail. It should be understood that the programs, processes, or methods described herein are not related or limited to any particular type of computing environment, unless indicated otherwise. Various types of general purpose or specialized computing environments may be used with or perform operations in accordance with the teachings described herein. Elements of the described embodiment shown in software may be totally or partially implemented in hardware and vice versa.

The illustrations described herein are intended to provide a general understanding of the structure of various embodiments. These illustrations are not intended to serve as a complete description of all of the elements and features of apparatus, processors and systems that utilize the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made. The invention is defined by the appended claims.

**Claims**

1. A method of testing an executable software application, the method comprising:

   extracting, by a processor, program code files from the executable application file (APF);
   converting, by the processor, the program code files into program text files (CF);
   for each program text file of the software application, computing at least one metric of syntactical metrics or program complexity metrics (QT1-QTn);
   computing, by the processor, a respective score (FMT) for each program text file based on the computed metrics;
   generating and providing, by the processor, a list of program text files, each program text file in the list being associated with its computed score;
   providing, by the processor, the list of program text files, the list of program text files being provided to identify program text files that are insufficiently obfuscated.

2. The method of claim 1, further comprising:

   comparing each computed score (FMT) with a threshold value, and
   selecting program text files (CF) as a function of results of the comparisons.

3. The method of one of claims 1 and 2, further comprising displaying the computed scores (FMT), each score being displayed as a tile (TL) having a color depending on the score value and being associated with a name of a corresponding program text file (CF).

4. The method of claim 3, wherein the displayed tiles are arranged in rows and columns.

5. The method of one of claims 1 to 4, further comprising extracting data files (DF) from the executable application file, the program code files and data files being distributed in folders (FD) of a folder tree structure (FTS), each folder corresponding to a package of the executable software application, and each program code file corresponding to a class in one of the packages.

6. The method of one of claims 1 to 5, wherein the syntactical metrics (QT1-QTn) are applied to character strings of the program text files and comprise at least one of:

ratios of character string numbers by size of character string with respect to a total number of character strings, a distribution of these ratios, and an average size of character string,
ratio of a number of character strings having at least one non-ASCII character, with respect to the total number of character strings,
ratio of a number of character strings having at least one non-alphabetic character, with respect to the total number of character strings,
ratio of a number of character strings having a first encoding and character strings having a second encoding, with respect to the total number of character strings,
ratio of a number of character strings having at least one Unicode character (in escape mode or not), with respect to the total number of character strings,
ratio of a number of character strings having at least one special character (such as carriage return, math symbol, space), with respect to the total number of character strings,
ratio of a number of character strings having a non-printable character, with respect to the total number of character strings, and
ratio of a number of character strings having an unknown encoding, with respect to the total number of character strings.

7. The method of one of claims 1 to 6, wherein the program complexity metrics (QT1-QTn) comprise at least one of:

a total number of lines of code,
numbers of packages, classes and functions or methods,
numbers of instructions per function or method,
a distribution of Application Programming Interface calls,
distribution of classes, methods, class attributes, constants,
Halstead's metrics, and
McCabe cyclomatic complexity analysis.

8. The method of one of claims 1 to 7, further comprising:

generating a control flow graph (CFG) for each of the program text files (CF), and/or
generating a call graph including all the methods of functions of the application.

9. The method of one of claims 1 to 8, further comprising comparing each computed score with a respective threshold value, selecting the scores as a function of the comparison with their respective threshold value, and computing a global score (FMT) for each program text file by adding coefficients defined respectively for each selected score as a function of the metrics corresponding to the selected score.

10. The method of one of claims 1 to 9, further comprising computing a global score (PMT) for a file set of program text files (CF) by applying weighting coefficients to the global scores (FMT) computed for the program text files of the file set, and/or computing a global score (AMT) for the software application by applying weighting coefficients to the scores computed from each program text file of the software application.

11. The method of one of claims 1 to 10, further comprising:

selecting an obfuscation processing,
selecting at least one source code file (SCF) as a function of the score computed from the corresponding program file (CF),
applying the selected obfuscation processing to a source code file corresponding to each selected program text file, to generate a modified source code file from each selected source code file, and
compiling and assembling the source code files of the software application including each modified source code file, to generate a new executable application file (APF1), the new executable software application being further tested to identify program text files that are insufficiently obfuscated.

12. The method of claim 11, wherein the global scores (FMT) computed for the program text files are based on one or more metrics selected by a user, and the obfuscation processing is selected as function of the selected metrics.

13. A computer system for selecting executable program files of an executable software application, the computer system being configured to implement the method of one of claims 1 to 12.

14. A computer program product loadable into a computer memory and comprising code portions which, when carried out by one or more computers, configure the one or more computers to carry out the method of one of claims 1 to 12.

**Patentansprüche**

1. Verfahren zum Testen einer ausführbaren Softwareanwendung, wobei das Verfahren Folgendes umfasst:

   Extrahieren, durch einen Prozessor, von Programmcodedateien aus der ausführbaren Anwendungsdatei (APF);
   Konvertieren, durch den Prozessor, der Programmcodedateien in Programmtextdateien (CF);
   für jede Programmtextdatei der Softwareanwendung, Berechnen von wenigstens einer Metrik von syntaktischen Metriken oder Programmkomplexitätsmetriken (QT1-QTn);
   Berechnen, durch den Prozessor, einer jeweiligen Punktzahl (FMT) für jede Programmtextdatei basierend auf den berechneten Metriken;
   Erzeugen und Bereitstellen, durch den Prozessor, einer Liste von Programmtextdateien, wobei jede Programmtextdatei in der Liste ihrer berechneten Punktzahl zugeordnet ist;
   Bereitstellen, durch den Prozessor, der Liste der Programmtextdateien, wobei die Liste der Programmtextdateien bereitgestellt wird, um Programmtextdateien, die nicht ausreichend verschleiert sind, zu identifizieren.

2. Verfahren nach Anspruch 1, das ferner Folgendes umfasst:
   Vergleichen jeder berechneten Punktzahl (FMT) mit einem Schwellenwert, und Auswählen von Programmtextdateien (CF) in Abhängigkeit von Ergebnissen der Vergleiche.

3. Verfahren nach einem der Ansprüche 1 und 2, das ferner ein Anzeigen der berechneten Punktzahl (FMT) umfasst, wobei jede Punktzahl als eine Kachel (TL) angezeigt wird, die eine Farbe, die von der Punktzahl abhängt, aufweist und einem Namen einer entsprechenden Programmtextdatei (CF) zugeordnet ist.

4. Verfahren nach Anspruch 3, wobei die angezeigten Kacheln in Zeilen und Spalten angeordnet sind.

5. Verfahren nach einem der Ansprüche 1 bis 4, das ferner das Extrahieren von Datendateien (DF) aus der ausführbaren Anwendungsdatei umfasst, wobei die Programmcodedateien und die Datendateien in Ordnern (FD) einer Ordnerbaumstruktur (FTS) verteilt sind, wobei jeder Ordner einem Gehäuse der ausführbaren Softwareanwendung entspricht, und jede Programmcodedatei einer Klasse in einem der Gehäuse entspricht.

6. Verfahren nach einem der Ansprüche 1 bis 5, wobei die syntaktischen Metriken (QT1 - QTn) auf Zeichenketten der Programmtextdateien angewendet werden und wenigstens eines der Folgenden umfassen:
   Verhältnisse von Zeichenkettennummern nach Größe der Zeichenkette hinsichtlich einer Gesamtzahl von Zeichenketten, einer Verteilung dieser Verhältnisse, und einer durchschnittlichen Größe von Zeichenketten, Verhältnis einer Anzahl von Zeichenketten, die wenigstens ein Nicht-ASCII-Zeichen aufweisen, hinsichtlich der Gesamtzahl der Zeichenketten, Verhältnis einer Anzahl von Zeichenketten, die wenigstens ein nichtalphabetisches Zeichen aufweisen, hinsichtlich der Gesamtzahl der Zeichenketten, Verhältnis einer Anzahl von Zeichenketten, die eine erste Codierung und Zeichenketten aufweisen, die eine zweite Codierung aufweisen, hinsichtlich der Gesamtzahl der Zeichenketten, Verhältnis einer Anzahl von Zeichenketten, die wenigstens ein Unicode-Zeichen (in einem Escape-Modus oder nicht) aufweisen, hinsichtlich der Gesamtzahl der Zeichenketten, Verhältnis einer Anzahl von Zeichenketten, die wenigstens ein spezielles Zeichen (wie etwa Wagenrücklauf, mathematisches Symbol, Leerzeichen) aufweisen, hinsichtlich der Gesamtzahl der Zeichenketten, Verhältnis einer Anzahl von Zeichenketten, die wenigstens ein nicht-druckbares Zeichen aufweisen, hinsichtlich der Gesamtzahl der Zeichenketten, und Verhältnis einer Anzahl von Zeichenketten, die wenigstens eine unbekannte Codierung aufweisen, hinsichtlich der Gesamtzahl der Zeichenketten.

7. Verfahren nach einem der Ansprüche 1 bis 6, wobei die Programmkomplexitätsmetriken (QT1-QTn) wenigstens eines der Folgenden umfassen:
eine Gesamtzahl von Codezeilen, Anzahl von Gehäusen, Klassen und Funktionen oder Verfahren, Anzahl von Anweisungen pro Funktion oder Verfahren, eine Verteilung von Aufrufen der Anwendungsprogrammierschnittstelle, Verteilung von Klassen, Verfahren, Klassenattributen, Konstanten, Halstead-Metriken und McCabe zyklomatische Komplexitätsanalyse.

8. Verfahren nach einem der Ansprüche 1 bis 7, das ferner Folgendes umfasst:
Erzeugen eines Steuerflussdiagramms (CFG) für jede der Programmtextdateien (CF), und/oder Erzeugen eines Aufrufdiagramms einschließlich aller Funktionsverfahren der Anwendung.

9. Verfahren nach einem der Ansprüche 1 bis 8, das ferner das Vergleichen jeder berechneten Punktzahl mit einem jeweiligen Schwellenwert, das Auswählen der Punktzahlen in Abhängigkeit von dem Vergleich mit ihrem jeweiligen Schwellenwert, und das Berechnen einer globalen Punktzahl (FMT) für jede Programmtextdatei durch Hinzufügen von Koeffizienten, die jeweils für jede ausgewählte Punktzahl definiert sind, in Abhängigkeit von den Metriken, die der ausgewählten Punktzahl entsprechen, umfasst.

10. Verfahren nach einem der Ansprüche 1 bis 9, das ferner das Berechnen einer globalen Punktzahl (PMT) für einen Dateisatz von Programmtextdateien (CF) durch Anwenden von Gewichtungskoeffizienten auf die globalen Punktzahlen (FMT), die für die Programmtextdateien des Dateisatzes berechnet wurden, und/oder das Berechnen einer globalen Punktzahl (AMT) für die Softwareanwendung durch Anwenden von Gewichtungskoeffizienten auf die aus jeder Programmtextdatei der Softwareanwendung berechneten Punktzahlen umfasst.

11. Verfahren nach einem der Ansprüche 1 bis 10, das ferner Folgendes umfasst:
Auswählen einer Verschleierungsverarbeitung, Auswählen wenigstens einer Quellcodedatei (SCF) in Abhängigkeit von der aus der entsprechenden Programmdatei (CF) berechneten Punktzahl, Anwenden der ausgewählten Verschleierungsverarbeitung auf eine Quellcodedatei, die jeder ausgewählten Programmtextdatei entspricht, um eine modifizierte Quellcodedatei aus jeder ausgewählten Quellcodedatei zu erzeugen, und Kompilieren und Assemblieren der Quellcodedateien der Softwareanwendung einschließlich jeder modifizierten Quellcodedatei, um eine neue ausführbare Anwendungsdatei (APF1) zu erzeugen, wobei die neue ausführbare Softwareanwendung weiter getestet wird, um Programmtextdateien, die nicht ausreichend verschleiert sind, zu identifizieren.

12. Verfahren nach Anspruch 11, wobei die für die Programmtextdateien berechneten globalen Punktzahlen (FMT) auf einer oder mehreren durch einen Benutzer ausgewählten Metriken basieren, und die Verschleierungsverarbeitung als Funktion der ausgewählten Metriken ausgewählt wird.

13. Computersystem zum Auswählen ausführbarer Programmdateien einer ausführbaren Softwareanwendung, wobei das Computersystem konfiguriert ist, um das Verfahren nach einem der Ansprüche 1 bis 12 zu implementieren.

14. Computerprogrammprodukt, das in einen Computerspeicher geladen werden kann und Codeabschnitte umfasst, die, wenn sie von einem oder von mehreren Computern ausgeführt werden, den einen oder die mehreren Computer konfigurieren, um das Verfahren nach einem der Ansprüche 1 bis 12 durchzuführen.

**Revendications**

1. Procédé de test d'une application logicielle exécutable, la méthode comprenant :

extraire, par un processeur, des fichiers de code programme à partir du fichier d'application exécutable (APF) ;
convertir, par le processeur, les fichiers de code programme en des fichiers de texte programme (CF) ;
pour chaque fichier de texte programme de l'application logicielle, calculer au moins une métrique syntaxique ou de complexité du programme (QT1-QTn) ;
calculer, par le processeur, un score respectif (FMT) pour chaque fichier de texte programme sur la base des métriques calculées ;
générer et fournir, par le processeur, une liste de fichiers de texte programme, chaque fichier de texte programme de la liste étant associé à son score calculé ;

fournir, par le processeur, la liste des fichiers de texte programme, la liste des fichiers de texte programme étant fournie pour identifier les fichiers de texte programme qui sont insuffisamment obscurcis.

2. Procédé selon la revendication 1, comprenant en outre les étapes suivantes :

comparer chaque score calculé (FMT) à une valeur seuil, et
sélectionner les fichiers de texte programme (CF) en fonction des résultats des comparaisons.

3. Procédé selon l'une des revendications 1 et 2, comprenant en outre l'étape d'affichage des scores calculés (FMT), chaque score étant affiché sous la forme d'une tuile (TL) ayant une couleur dépendant de la valeur du score et étant associé à un nom d'un fichier de texte programme (CF) correspondant.

4. Procédé selon la revendication 3, dans lequel les tuiles affichées sont disposées en rangées et en colonnes.

5. Procédé selon l'une des revendications 1 à 4, comprenant en outre l'étape d'extraction de fichiers de données (DF) du fichier d'application exécutable, les fichiers de code programme et les fichiers de données étant répartis dans des dossiers (FD) d'une structure arborescente de dossiers (FTS), chaque dossier correspondant à un paquet de l'application logicielle exécutable, et chaque fichier de code programme correspondant à une classe dans l'un des paquets.

6. Procédé selon l'une des revendications 1 à 5, dans lequel les métriques syntaxiques (QT1-QTn) sont appliquées aux chaînes de caractères des fichiers de texte programme et comprennent au moins l'un des paramètres suivants :

les rapports du nombre de chaînes de caractères par taille de chaîne de caractères par rapport à un nombre total de chaînes de caractères, une répartition de ces rapports et une taille moyenne de chaîne de caractères,
le rapport d'un certain nombre de chaînes de caractères ayant au moins un caractère non-ASCII, par rapport au nombre total de chaînes de caractères,
le rapport d'un certain nombre de chaînes de caractères ayant au moins un caractère non-alphabétique, par rapport au nombre total de chaînes de caractères,
le rapport d'un certain nombre de chaînes de caractères ayant un premier codage et des chaînes de caractères ayant un second codage, par rapport au nombre total de chaînes de caractères,
le rapport d'un certain nombre de chaînes de caractères ayant au moins un caractère Unicode (en mode d'échappement ou non), par rapport au nombre total de chaînes de caractères,
le rapport d'un certain nombre de chaînes de caractères ayant au moins un caractère spécial (tel que le retour chariot, un symbole mathématique, l'espace), par rapport au nombre total de chaînes de caractères,
le rapport d'un certain nombre de chaînes de caractères ayant un caractère non imprimable, par rapport au nombre total de chaînes de caractères, et
le rapport d'un certain nombre de chaînes de caractères ayant un codage inconnu, par rapport au nombre total de chaînes de caractères.

7. Procédé selon l'une des revendications 1 à 6, dans lequel les métriques de complexité de programme (QT1-QTn) comprennent au moins l'un des paramètres suivants :

un nombre total de lignes de code,
un nombre de paquets, classes et fonctions ou méthodes,
un nombre d'instructions par fonction ou méthode,
une distribution des appels de l'interface de programmation d'application,
une distribution des classes, méthodes, attributs de classe, constantes,
des métriques de Halstead, et
une analyse de la complexité cyclomatique de McCabe.

8. Procédé selon l'une des revendications 1 à 7, comprenant en outre les étapes suivantes :

générer un graphe de flux de contrôle (CFG) pour chacun des fichiers de texte programme (CF), et/ou
générer un graphe d'appels comprenant toutes les méthodes ou fonctions de l'application.

9. Procédé selon l'une des revendications 1 à 8, comprenant en outre des étapes de comparaison de chaque score calculé à une valeur seuil respective, de sélection des scores en fonction de la comparaison à leur valeur seuil respective, et de calcul d'un score global (FMT) pour chaque fichier de texte programme en ajoutant des coefficients définis respectivement pour chaque score sélectionné en fonction des métriques correspondant au score sélectionné.

10. Procédé selon l'une des revendications 1 à 9, comprenant en outre des étapes de calcul d'un score global (PMT) pour un ensemble de fichiers de texte programme (CF) en appliquant des coefficients de pondération aux scores globaux (FMT) calculés pour les fichiers de texte programme de l'ensemble de fichiers, et/ou de calcul d'un score global (AMT) pour l'application logicielle en appliquant des coefficients de pondération aux scores calculés à partir de chaque fichier de texte programme de l'application logicielle.

11. Procédé selon l'une des revendications 1 à 10, comprenant en outre les étapes suivantes :

sélectionner un traitement d'obscurcissement,
sélectionner au moins un fichier de code source (SCF) en fonction du score calculé à partir du fichier de programme (CF) correspondant,
appliquer le traitement d'obscurcissement sélectionné à un fichier de code source correspondant à chaque fichier de texte programme sélectionné, afin de générer un fichier de code source modifié à partir de chaque fichier de code source sélectionné, et
compiler et assembler des fichiers de code source de l'application logicielle, y compris chaque fichier de code source modifié, pour générer un nouveau fichier d'application exécutable (APF1), la nouvelle application logicielle exécutable faisant l'objet de tests supplémentaires pour identifier les fichiers de texte programme qui sont insuffisamment obscurcis.

12. Procédé selon la revendication 11, dans lequel les scores globaux (FMT) calculés pour les fichiers de texte programme sont basés sur une ou plusieurs métriques sélectionnées par un utilisateur, et le traitement d'obscurcissement est sélectionné en fonction des métriques sélectionnées.

13. Système informatique de sélection de fichiers de programme exécutable d'une application logicielle exécutable, le système informatique étant configuré pour mettre en œuvre le procédé selon l'une des revendications 1 à 12.

14. Produit programme d'ordinateur pouvant être chargé dans une mémoire d'ordinateur et comprenant des portions de code qui, lorsqu'elles sont exécutées par un ou plusieurs ordinateurs, configurent le ou les ordinateurs pour exécuter le procédé selon l'une des revendications 1 à 12.

Fig. 1

Fig. 2

Fig. 3A

Fig. 3B

Fig. 3C

Fig. 3D

Fig. 4

Fig. 5

Fig. 6

Fig. 7

**EP 3 467 691 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017099307 A
- US 9135442 B
- US 6594761 B, Chow
- US 6668325 B, Collberg
- US 6779114 B, Chow